# EUROPÄISCHE PATENTSCHRIFT

(11) **EP 1 727 702 B1**
(45) Veröffentlichungstag und Bekanntmachung des Hinweises auf die Patenterteilung: **26.12.2007**
(21) Anmeldenummer: 05701491.2
(22) Anmeldetag: 12.01.2005
(51) Int. Cl.: B60N 2/02, B60R 21/01, B60N 2/00

(54) **VERFAHREN ZUR EINSTELLUNG VON SITZKOMPONENTEN**
METHOD FOR ADJUSTING THE COMPONENTS OF A SEAT
PROCEDE DE REGLAGE DE COMPOSANTS D'UN SIEGE

(30) Priorität: 19.03.2004 DE 102004013598
(43) Veröffentlichungstag der Anmeldung: 06.12.2006
(73) Patentinhaber: Robert Bosch GmbH, 70442 Stuttgart (DE)
(72) Erfinder: BOTHE, Hans-Dieter, 30926 Seelze (DE); TRINH, Hoang, 31134 Hildesheim (DE); FREIENSTEIN, Heiko, 31141 Hildesheim (DE); ENGELBERG, Thomas, 31137 Hildesheim (DE); SCHEDLER, Christian, 29351 Eldingen (DE)
(86) Internationale Anmeldenummer: PCT/EP2005/050103
(87) Internationale Veröffentlichungsnummer: WO 2005/090118

(56) Entgegenhaltungen:
- WO-A-01/64468
- US-A1- 2002 125 050
- US-A1- 2003 234 519

## Beschreibung

### Stand der Technik

Die Erfindung geht aus von einem Verfahren zur Einstellung von Sitzkomponenten nach der Gattung des unabhängigen Patentanspruchs.

Aus WO 01/64468 A1 ist bereits ein Verfahren zum Einstellen von für die Benutzung eines Kraftfahrzeugs relevanten Parametern bekannt, bei welchem die Position zumindest eines Körperteils eines Insassen mit einem dreidimensionalen, bildgebenden Verfahren ermittelt wird und wenigstens ein für die Benutzung des Fahrzeugs relevantes Bauteil in eine von der Position des Oberflächenbereiches abhängige Stellung bewegt wird.

Weiterhin ist aus DE 101 33 759 C2 eine Einrichtung zur Erkennung des Verlaufs der Sicherheitsgurte im Kfz mit Hilfe eines bildgebenden Sensors bekannt.

### Vorteile der Erfindung

Das erfindungsgemäße Verfahren zur Einstellung von Sitzkomponenten mit den Merkmalen des unabhängigen Patentanspruchs hat demgegenüber den Vorteil, dass nunmehr die Videosensorik das Signal in Abhängigkeit von einer Insassenklasse, einem Insassenvolumen, einer Insassenpose und einer Kopfposition erzeugt. Damit kann genau auf den Insassen und seine jeweilige Position geschlossen werden, so dass in Reaktion darauf eine optimale Einstellung der Sitzkomponenten bzw. des Sicherheitsgurtes möglich ist, so dass ein optimaler Schutz für einen Crash gegeben ist. Darüber hinaus wird auch der Sicherheitsgurt eingestellt, so dass für einen möglichen Crash der Insasse bezüglich der Sitzkontur und der anlegbaren Schutzmaßnahmen optimal geschützt wird. Damit ist eine automatische, auf den jeweiligen Insassen zugeschnittene Konditionierung der Sitz- und Sicherheitsgurteinstellungen, beispielsweise die Höhe der Kopfstütze und Gurtaufhängung, möglich.

Durch die in den abhängigen Ansprüchen aufgeführten Maßnahmen und Weiterbildungen sind vorteilhafte Verbesserungen der im unabhängigen Patentanspruch angegebenen Verfahren zur Einstellung von Sitzkomponenten möglich.

Es ist vorgesehen, dass mit dem Verfahren auch eine Einstellung des Fahrzeugsitzes und des Sicherheitsgurtes für eine bestimmte Insassenpose möglich ist, selbst wenn der Insasse kurzzeitig eine andere Pose einnimmt. Dies wird maßgeblich dadurch ermöglicht, dass mittels der Videosensorik die Insassenpose kontinuierlich ermittelt wird und bei der Sitzeinstellung berücksichtigt wird, indem auf diejenige Insassenpose zurückgerechnet wird, für die der Fahrzeugsitz und der Sicherheitsgurt eingestellt werden sollen. Hiermit kann zum Beispiel der Sitz für eine aufrechte Sitzpose eingestellt werden, selbst wenn sich der Insasse kurzzeitig vorbeugt. Somit kann sich der Insasse während des Einstellvorgangs frei bewegen und muss nicht in einer bestimmten Pose verharren.

Es ist vorgesehen, dass das Verfahren kontinuierlich die Sitzeinstellungen durchführt. D.h., mit jeder Veränderung der Sitzposition durch den Fahrzeuginsassen erfolgt eine entsprechende Anpassung der beweglichen Sitzkomponenten. Alternativ ist es möglich, dass der Zeitraum, in dem die Einstellung erfolgt, vorgegeben ist. Diese Vorgabe kann werksseitig erfolgen oder auch durch einen Benutzer, wobei dieser Zeitraum sowohl die Messzeit, als auch die Einstellung umfasst. Dieser Zeitraum kann beispielsweise 10 Sekunden abdecken, insbesondere nach dem Start des Fahrzeugs, also dem Einschalten der Zündung. Aber auch bei einer kontinuierlichen Anpassung ist darauf zu achten, dass mit einer gewissen Trägheit vorgegangen wird. D.h. nicht jede Veränderung sollte sofort zu einer entsprechenden Änderung der Sitzelemente führen. Dabei kann beispielsweise vorgegeben sein, dass eine gewisse Anzahl von Messpunkten abgewartet wird und dann in Abhängigkeit von diesen Messpunkten die Änderung der Sitzelemente erfolgt.

Es ist vorgesehen, dass die Einstellung der Sitzelemente in Abhängigkeit von einem Signal einer Precrashsensorik, wie einer Umfeldsensorik oder einer Unfallsensorik durchgeführt wird. Dann wird bevor es zu einem Aufprall oder zur Bremswirkung oder zu schweren Verletzungen kommt, der Sitz noch optimal eingestellt, um die Folgen eines Unfalls zu minimieren. Damit erfolgt die Einstellung nur in Gefährdungssituationen für den Fahrzeuginsassen.

Zur Bestimmung der optimalen Sitzpositionen und der Insassenklassifizierung ist das erfindungsgemäße Verfahren mit einem Speicher verbunden, in dem die notwendigen Daten abgelegt sind, beispielsweise die Grenzen für die Insassenklassifizierung und Daten über den Sitz wie Bewegbarkeit von Sitzelementen, Größe u.s.w. Mit diesen Daten ist es dann möglich, die entsprechenden Sitzeinstellungen für den betreffenden Insassen vorzunehmen.

### Zeichnung

Ausführungsbeispiele der Erfindung sind in der Zeichnung dargestellt und werden in der nachfolgenden Beschreibung näher erläutert.

Es zeigen
- Figur 1: ein erstes Blockschaltbild einer Vorrichtung,

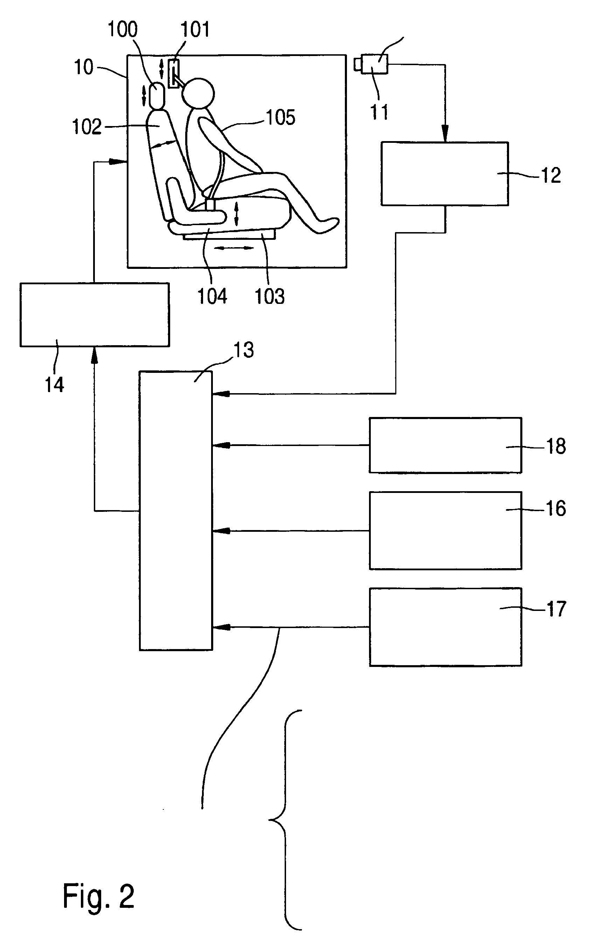

- Figur 2: ein zweites Blockschaltbild der Vorrichtung und
- Figur 3: Positionen, die ein Insasse während einer Fahrt einnehmen kann.

### Beschreibung

Die Einstellung der Fahrzeugsitze und der Sicherheitsgurte, zum Beispiel der Gurtaufhängung, wird üblicher Weise von den Fahrzeuginsassen manuell oder mittels Aktorikgeberschalter bzw. Knöpfe vorgenommen. Hierbei werden häufig Einstellungen gewählt, die für die Wirkung der Rückhaltesysteme bzw. Personenschutzsysteme nicht optimal sind.

Erfindungsgemäß wird vorgeschlagen, in Abhängigkeit von einem Signal einer Videosensorik, die den Fahrzeuginsassen über verschiedene Merkmale umfassend charakterisiert, solche Einstellungen automatisch adaptiv vorzunehmen. Dabei werden nicht nur die Ausmaße des jeweiligen Insassen berücksichtigt, sondern auch seine Pose und seine Kopfposition.

Die erfindungsgemäße Vorrichtung kann werksseitig oder vom Benutzer über ein geeignetes Mensch-Maschine-interface (MMI) wie folgt konfiguriert werden:
1. Die vom Videosensor erfassten Daten werden kontinuierlich zur Regelung der Sitz- und Gurteinstellung verwendet.
2. Die vom Videosensor erfassten Daten werden für einen definierten werksseitig oder vom Benutzer vorgegebenen Zeitraum, beispielsweise nach Start des Motors für eine Dauer von beispielsweise 10 Sekunden, zur Sitz- und Gurteinstellung verwendet.
3. Die Sitz- und Gurteinstellung wird gemäß Punkt 2 initial vorgenommen und in einer Precrash- oder Crashsituation entsprechend der aktuellen Information, die vom Videosensor und weiteren Sensoren, wie einem Beschleunigungssensor oder Roll-Over-Sensor geliefert werden, angepasst
4. Die vom Videosensor kontinuierlich erfassten Daten werden gespeichert und nur im Precrash- oder Crashfall zur optimalen Einstellung der Sitz- und Gurtposition verwendet.

Mit Hilfe einer Videosensorik wird automatisch eine Sitz- und Gurtposition eingestellt, die in einer Crashsituation einen optimalen Insassenschutz bietet Dies wird durch eine Einstellung der Sitz- und Gurtposition erreicht, die individuell auf den jeweiligen Insassen zugeschnitten ist.

Da die Einstellung der Sitz- und Gurtposition von der erfindungsgemäßen Vorrichtung automatisch ermittelt wird und die Aktuatorik entsprechend angesteuert wird, benötigen die Insassen keine Kenntnisse in Bezug auf eine optimale Sitz- und Gurteinstellung und müssen auch keine manuellen Einstellungen mehr vornehmen.

Ein weiterer Vorteil ergibt sich dadurch, dass die mit Hilfe des Videosensors ermittelten optimalen Sitz- und Gurteinstellungen auch gespeichert werden können. Somit kann im Precrashfall auch dann, wenn der Insasse die Sitz- und Gurtposition initial oder nachträglich, beispielsweise im Sinne eines höheren Sitzkomforts, vorgenommen hat, rechtzeitig eine individuelle für den Crashfall optimale Sitz- und Gurtposition automatisch abgerufen und eingestellt werden. Dabei kann auch die aktuelle Situation im Fahrzeuginnenraum berücksichtigt werden, die mit dem Videosensor laufend ermittelt wird. Dadurch ergeben sich weitere Vorteile der Erfindung, da beispielsweise bestimmten Insassenposen, beispielsweise wenn der Fahrer in Richtung des Handschuhfaches vorgebeugt ist, in einer Precrash- und in einer Crashsituation eine entsprechend angepasste Konditionierung der Rückhaltesysteme sowie der Sitz- und Gurtposition automatisch vorgenommen werden kann.

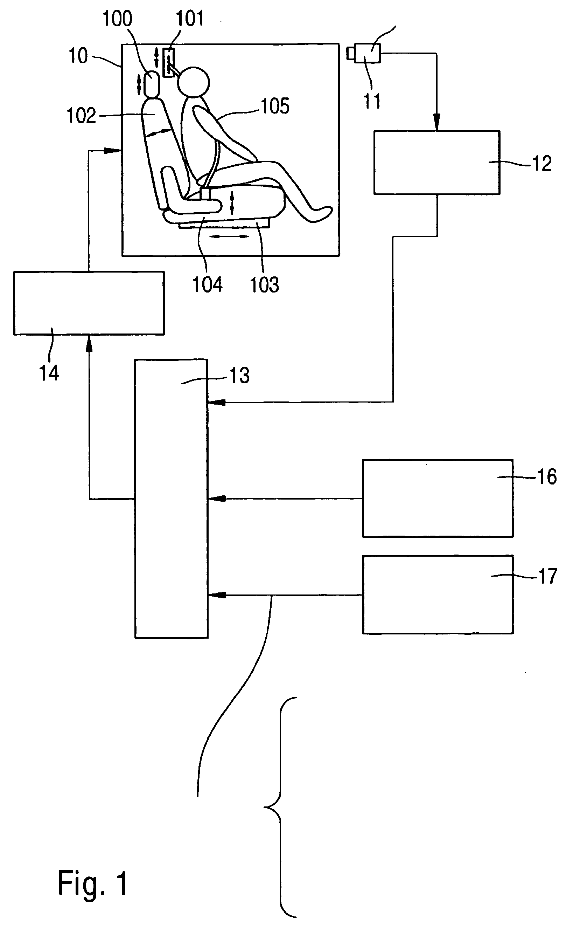

Figur 1 zeigt eine Vorrichtung zur Einstellung von Sitzelementen. Zusätzlich wird hier auch der Sicherheitsgurt eingestellt. Ein Videosensor 11 erfasst berührungslos den Fahrzeuginnenraum. In einer danach angeordneten Einheit zur Signal- bzw. Bildverarbeitung 12 werden die Insassenklasse, beispielsweise 5%-Frau, 50%-Mann, das Insassenvolumen, also die Korpulenz des Insassen, die Sitzhöhe des Insassen, die Insassenpose, die 3-D-Kopfposition und gegebenenfalls auch die Blickposition des Insassen ermittelt.

Mit Hilfe eines Steuergeräts 13 wird die Aktuatorik zur Sitz- und Gurteinstellung 14 so angesteuert, dass eine optimale Wirkung der Rückhaltesysteme gegeben ist. Hierfür wird die Kopfstütze 100, die Rücklehne 102, die Sitzlängenposition 103 und die Höhe des Gurtaufnahmepunktes 101 an die Größe der jeweiligen Insassen 105 angepasst werden. Im Steuergerät 13 ist im Allgemeinen eine Speichereinheit integriert, auf welche die Recheneinheit des Steuergeräts 13, aber zum Beispiel auch von außen über eine Diagnoseschnittstelle, zugegriffen werden kann. Diese Speichereinheit enthält im Allgemeinen die Standardkörpermaße der Insassenklasse, beispielsweise gemäß DIN 33402-2, die relevanten Konstruktionsdaten des Fahrzeuginnenraums, beispielsweise Sitzgeometrie, Freiheitsgrade der Sitzeinstellung sowie Strategien für die Sitzeinstellung, die beispielsweise in Form von verschiedenen Kennlinien vorliegen können. Außerdem können auf die Insassen bezogene Sitzeinstellungen darin gespeichert werden, die beispielsweise beim Start des Fahrzeugs mit Hilfe der Innenraumsensorik ermittelt wurden. Diese auf die Insassen bezogenen Sitzeinstellungen können dann beispielsweise im Precrashfall abgerufen und zur optimalen Sitzeinstellung verwendet werden.

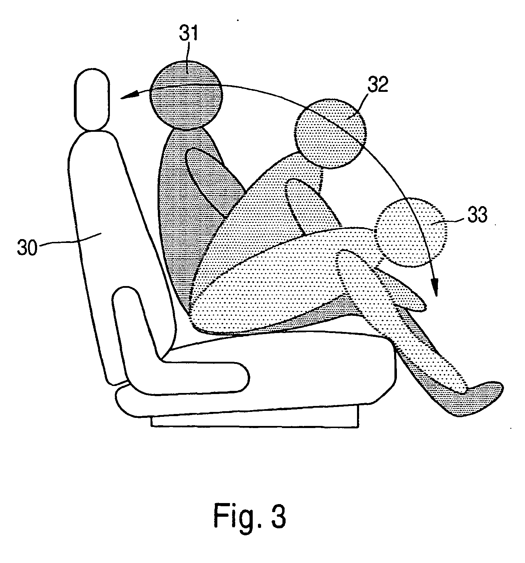

Anhand der mit dem Videosensor 11 bestimmten Insassenklasse können die Standardkörpermaße, zum Beispiel Größe, Länge der Beine und des Oberkörpers, aus der im Steuergerät 13 integrierten Speichereinheit ausgelesen werden. Auf Basis der gemessenen Kopfposition und der Insassenpose kann dann eine an den jeweiligen Insassen angepasste Einstellung der Sitzposition und des Sicherheitsgurts erfolgen. Der Einstellvorgang ist somit auch bei beliebigen Insassenposen möglich, da auf eine Sitz- und Gurteinstellung für eine aufrechte Insassenpose zurückgerechnet werden kann. Dies ergibt sich beispielsweise aus Figur 3, die auf einem Sitz 30 drei verschiedene Insassenposen, die vorgebeugte 33, und die aufrechte 31 sowie eine Position dazwischen 32, darstellt.

Die mit Hilfe der erfindungsgemäßen Vorrichtung ermittelte Sitz- und Sicherheitsgurtposition, die für die Wirkung der Rückhaltesysteme optimal ist, kann wahlweise sofort eingestellt werden oder in einem Speicher so abgelegt werden, dass sie beispielsweise in einer Precrashsituation abgerufen und automatisch eingestellt werden kann. Zusätzlich kann in einer Precrashsituation die optimale Sitz- und Sicherheitsgurtposition in Abhängigkeit der jeweiligen Situation im Fahrzeuginnenraum erfolgen, beispielsweise in Abhängigkeit der momentanen Insassenpose, die wiederum mit dem Innenraumsensor, also dem Videosensor 11, ermittelt wird. Eine Precrashsituation kann mittels weiterer Sensoren 18, zum Beispiel mit Hilfe von in den Fahrzeugaußenraum gerichteten Video- oder Radarsensoren, detektiert werden. Außerdem können weitere Sensoren 18 Informationen über den momentanen Fahrzustand, zum Beispiel Fahrzeuggeschwindigkeit, Detektion eines drohenden Fahrzeugüberschlags, liefern. Auch diese Information können für eine situationsangepasste Einstellung der Sitz- und Sicherheitsgurlposition im Sinne einer optimalen Rückhaltesystemwirkung genutzt werden.

Mit Hilfe eines Mensch-Maschine-Interface 17, alternativ aber auch über eine werksseitig durchgeführte Einstellung, zum Beispiel im Steuergerät 13, können die folgenden Betriebsmodi gewählt werden:
Modus 1: Die Ansteuerung der Sitz- und Gurtakluatorik erfolgt kontinuierlich mittels eines ständig aktiven Regelung auf Basis der gemessenen Innenraumsensorsignale.
Modus 2: Einstellung der Sitzaktuatorik auf Basis der Videosensorsignale, die über einen vorab definierten Zeitraum gemessen werden, beispielsweise mit einer Aufnahmedauer von 10 Sekunden.
Modus 3: Manuelle Steuerung der Sitzaktuatorik über ein geeignetes Mensch-Maschine-Interface 16.

## Patentansprüche

1. Verfahren zur Einstellung von Sitzkomponenten (102, 103, 104)) und mindestens eines Sicherheitsgurtes in Abhängigkeit von einem Signal einer Videosensorik (11), **dadurch gekennzeichnet, dass** die Videosensorik das Signal in Abhängigkeit von einer Insassenklasse, einem Insassenvolumen, einer Insassenpose und einer Kopfposition erzeugt, wobei das Signal derart erzeugt wird, dass eine optimale Rückhaltesystemwirkung erreicht wird, indem eine Kopfstütze (100), eine Rückenlehmen (102), eine Sitzlängenposition (103) und eine Höhe eines Gurtaufnahmepunktes (101) an eine Größe eines Insassen (105) angepasst werden, nur wenn eine Precrash- oder eine Crashsituation vorliegt, dass anhand der mit der Videosensorik (11) bestimmten Insassenklasse Standardkörpermaße: Größe, eine Länge der Beine und des Oberkörpers aus einer im Steuergerät (13) integrierten Speichereinheit ausgelesen werden.

2. Verfahren nach Anspruch 2, **dadurch gekennzeichnet, dass** die Einstellung der Sitzkomponenten (102, 103, 104) und des Sicherheitsgurtes (101) unabhängig von Änderungen der Insassenpose, die vorübergehend über einen vorgebbaren ersten Zeitraum andauern, vorgenommen wird.

3. Verfahren nach Anspruch 1, **dadurch gekennzeichnet, dass** eine kontinuierlichen Einstellung der Sitzkomponenten (100 bis 104) vorgenommen wird.

4. Verfahren nach Anspruch 1, **dadurch gekennzeichnet, dass** wenigstens ein zweiter Zeitraum, in dem die Einstellung erfolgt, vorgegeben ist.

5. Verfahren nach Anspruch 4, **dadurch gekennzeichnet, dass** ein Benutzer den wenigstens einen zweiten Zeitraum vorgibt.

## Claims

1. Method for adjusting seat components (102, 103, 104) and at least one seatbelt as a function of a signal of a video sensor arrangement (11), **characterized in that** the video sensor arrangement produces the signal as a function of an occupant's type, an occupant's volume, an occupant's posture and a head position, the signal being produced in such a manner than an optimum restraint system action is achieved by a head restraint (100), a backrest (102), a seat length position (103) and a height of a belt-receiving point (101) being adapted to a height of an occupant (105) only when there is a pre-crash or a crash situation, and **in that**, with reference to the occupant's type determined by the video sensor arrangement (11), standard body sizes: height, length of the legs and of the upper body, are read from a memory unit integrated in the control device (13).

2. Method according to Claim 1, **characterized in that** the adjustment of the seat components (102, 103, 104) and of the seat belt (101) is undertaken independently of changes of the occupant's posture that last temporarily for a specifiable first period of time.

3. Method according to Claim 1, **characterized in that** a continuous adjustment of the seat components (100 to 104) is undertaken.

4. Method according to Claim 1, **characterized in that** at least one second period of time in which the adjustment takes place is specified.

5. Method according to Claim 4, **characterized in that** a user specifies the at least one second period of time.

## Revendications

1. Procédé de réglage de composants d'un siège (102, 103, 104) et d'au moins une ceinture de sécurité en fonction du signal d'un capteur vidéo (11),
**caractérisé en ce que**
le capteur vidéo (11) génère le signal en fonction d'une classe de passager, d'un volume de passager, d'une attitude de passager et d'une position de tête,
le signal étant généré pour obtenir un effet optimum du système de retenue par adaptation de l'appuie-tête (100), du dossier (102), de la position longitudinale de siège (103) et de la hauteur du point d'accrochage de la ceinture (101) à la taille du passager (105) seulement si l'on est dans le cas d'une situation de pré-collision ou de collision, et à l'aide de la classe de passager définie par le capteur vidéo (11), on extrait les dimensions standards du corps humain : taille, longueur des jambes et du buste, d'une unité de mémoire intégrée à l'appareil de commande (13).

2. Procédé selon la revendication 1,
**caractérisé en ce que**
le réglage des composants de siège (102, 103, 104) et de la ceinture de sécurité (101) se fait indépendamment des variations des attitudes de passagers, qui peuvent durer provisoirement pendant un premier intervalle de temps prédéfini.

3. Procédé selon la revendication 1,
**caractérisé en ce qu'**
on effectue un réglage continu des composants de siège (100-104).

4. Procédé selon la revendication 1,
**caractérisé en ce qu'**
on prédéfinit au moins une seconde période dans laquelle se fait le réglage.

5. Procédé selon la revendication 4,
**caractérisé en ce qu'**
un utilisateur prédéfinit au moins une seconde période.
